(19) Europäisches Patentamt
European Patent Office
Office européen des brevets

(11) **EP 4 386 628 A1**

(12) **EUROPEAN PATENT APPLICATION**

(43) Date of publication:
**19.06.2024 Bulletin 2024/25**

(21) Application number: **22217410.4**

(22) Date of filing: **30.12.2022**

(51) International Patent Classification (IPC):
**G06N 3/0464** (2023.01)   **G06N 3/0495** (2023.01)
**G06N 3/0442** (2023.01)   **G06N 3/09** (2023.01)

(52) Cooperative Patent Classification (CPC):
**G06N 3/0464; G06N 3/0495; G06N 3/09;**
G06N 3/0442

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **14.12.2022 US 202263387451 P**

(71) Applicant: **Hitachi Energy Ltd**
**8050 Zürich (CH)**

(72) Inventors:
• **CHAKRAVORTY, Jhelum**
**Montréal, H3N2B3 (CA)**
• **DAWIDOWSKI, Pawel**
**32-010 Malopolskie (PL)**

(74) Representative: **Vossius & Partner**
**Patentanwälte Rechtsanwälte mbB**
**Siebertstraße 3**
**81675 München (DE)**

(54) **AUTOMATED PROGRESSIVE TUNING OF MACHINE-LEARNING MODEL FOR FAULT LOCALIZATION IN OVERHEAD TRANSMISSION LINE**

(57)   Conventional methods for reducing the size of a machine-learning model generally involve a costly and slow search for a new architecture, or pruning model parameters to produce a sparse machine-learning model. However, some environments, such as regression tasks to be embedded in hardware for performance in real time on time series data, require the pruned machine-learning model to be dense. Accordingly, automated progressive tuning is disclosed to jointly tune both the architecture and the parameters of a machine-learning model, initially trained for a first environment, for deployment in a second environment. In an embodiment, a constraint is imposed on the dimensions of the machine-learning model, during the tuning, to prune the machine-learning model into a smaller, dense machine-learning model that is suitable for embedding in hardware, as well as other potential environments.

FIG. 1

EP 4 386 628 A1

**Description**

**BACKGROUND**

Field of the Invention

The embodiments described herein are generally directed to machine learning, and, more particularly, to automated progressive tuning of a machine-learning model to be used, for example, for fault localization in an overhead transmission line.

Description of the Related Art

Artificial neural networks, such as convolutional neural networks (CNNs) and deep neural networks (DNNs), are capable of achieving satisfactory levels of performance in various applications. However, the best performing neural networks are often large and complex. This size may prevent implementation in applications that require strict, real-time execution with limited computational capacity, such as when the neural network must be embedded in hardware.

One such application is power system protection, which must disconnect a faulted part of a power system, in real time, to limit physical damage to the remainder of the power system. For example, a line protection system may be employed to protect an overhead transmission line by tripping a circuit breaker as quickly as possible when a fault is detected up to a predefined reach setting. One task of such a line protection system is to estimate the location of the fault. A machine-learning regression model can be trained to perform this fault localization. However, the trained model has to be installed in a relay, which has limited computational capacity, and therefore, is unable to accommodate a large machine-learning model.

Relearning or "tuning" of a machine-learning model may be employed to quickly adapt a machine-learning model to a new dataset. For example, in transfer learning, an existing machine-learning model, which has been previously trained for one task, is retrained for a different, but often related, task. There are several advantages to tuning a pre-trained model, as opposed to training from scratch. These advantages include faster learning, improved performance, and prevention of overfitting on smaller datasets. However, reuse of the same architecture as the existing machine-learning model limits the machine-learning model's ability to relearn.

Such a limitation is also present in conventional pruning methods. For example, Pytortch™ and TensorFlow™ comprise model-pruning libraries that perform local (i.e., layer-wise) and global pruning of machine-learning models by setting and fixing weights and biases to zero. The weights and biases are chosen either randomly or based on importance, as determined according to some metric (e.g., using L1 regularization). The resulting machine-learning model is sparse, but without much loss in performance. However, while such pruning can reduce computational requirements when executing the machine-learning model, it does not reduce the dimensions of the pruned part of the machine-learning model.

Yong-Deok et al., "Compression of Deep Convolutional Neural Networks for Fast and Low Power Mobile Applications," International Conference on Learning Representations (ICLR) 2016, which is hereby incorporated herein by reference as if set forth in full, adapted one-shot whole network compression, which decomposes a $D \times R \times S \times T$ dimensional tensor into slices of $D \times S_1$, $R \times S_s$, $S \times S_3$, and $T \times S_4$, and then checks the accuracy of decomposed kernels with reduced size. This method has three main steps: (i) analyze the principal subspace of mode-3 and mode-4 matricization of each layer's kernel tensor with global analytic variational Bayesian matrix factorization; (ii) apply Tucker decomposition, also known as Higher-Order Singular Value Decomposition (SVD), on each layer's kernel tensor with previously determined rank; and (iii) fine-tune the entire network with standard backpropagation.

Han et al., "Once-for-All: Train One Network and Specialize It for Efficient Deployment," ICLR 2020, which is hereby incorporated herein by reference as if set forth in full, proposed training a large machine-learning model, and then choosing subnetworks. In this method, the training stage is decoupled from a specialization stage. In the training stage, the focus is on improving the accuracy of all subnetworks, which are derived by selecting different parts of the once-for-all network. In the specialization stage, a subset of the subnetworks are sampled to train an accuracy predictor and latency predictors. Based on the target hardware and constraints, a predictor-guided architecture search is conducted to get a specialized subnetwork.

Yihui et al., "AMC: AutoML for Model Compression and Acceleration on Mobile Devices, arXiv 2019, which is hereby incorporated herein by reference as if set forth in full, proposed a model-compression method which leverages reinforcement learning to provide the model-compression policy. Firstly, an iterative pruning method is proposed in which some configuration is chosen from a candidate set of configurations and then scheduled in a training. Comparisons between the estimated confidence bounds associated with the various configurations are used to progressively prune the candidate set of configurations by removing low-performing configurations. Secondly, for a given layer of the machine-learning model, a compression parameter is calculated based on the pruning loss of each hidden layer in the machine-learning model. Thirdly, a pruning method clusters input weights according to their patterns, and each cluster is pruned to achieve a predetermined sparsity. Fourthly, a spare distillation framework (SDF) distills knowledge from a compute-heavy teacher model, while simultaneously pruning a student model in a single pass of training.

In broad terms, these publications and others can be categorized into a few classes of tuning: (i) selection of the best sub-model by a super-model, using a costly and slow process (e.g., neural architecture search, reinforcement learning, etc.); (ii) sparsification of the machine-learning model; or (iii) scheduling of the best candidate configuration for pruning based on a performance estimate.

What is needed is a tuning process that is capable of obtaining a dense machine-learning model with reduced dimensions that is executable, in real time, on a device with limited computational capacity, such as a relay in a line protection system, to, for example, perform a regression task with time series data.

## SUMMARY

Accordingly, systems, methods, and non-transitory computer-readable media are disclosed for automated progressive tuning of a machine-learning model. An objective of certain embodiments is to quickly and jointly tune both the architecture and parameters of a machine-learning model for a change in environment (e.g., in terms of input-output data distribution and/or computational resources). A further objective of certain embodiments is to iteratively retrain layers of a layered machine-learning model, such as a neural network, in a defined order, until a stopping condition is satisfied. A further objective of certain embodiments is to prune the machine-learning model, until a certain measure of reduction is achieved, to produce a smaller, dense machine-learning model. A further objective of certain embodiments is to vary the learning rate for different layers, for example, by decaying the learning rate after each iteration in the case of pruning.

In an embodiment, a method comprises using at least one hardware processor to: receive a machine-learning model with an architecture and parameters trained for operation in a first environment; jointly tune both the architecture and the parameters of the machine-learning model using a training dataset for a second environment that is different from the first environment; and deploy the tuned machine-learning model to the second environment.

The machine-learning model may comprise a neural network. For example, the neural network may be a convolutional neural network.

Jointly tuning both the architecture and the parameters of the machine-learning model may comprise, until a stopping condition is satisfied, for each of one or more layers of the neural network, retraining the layer. The one or more layers may be a plurality of layers. The plurality of layers may be trained in an order from one of the plurality of layers that is closest to an output of the machine-learning model to another one of the plurality of layers that is closest to an input of the machine-learning model.

Jointly tuning both the architecture and the parameters of the machine-learning model may comprise, in each of one or more iterations: selecting one of a plurality of layers in the neural network that has not been retrained in any prior one of the one or more iterations; retraining the selected layer; determining if a stopping condition is satisfied; when the stopping condition is satisfied, stopping the joint tuning; and, when the stopping condition is not satisfied, adding a next iteration to the one or more iterations. The one or more iterations may be a plurality of iterations, wherein each selected layer is retrained according to a learning rate, and wherein jointly tuning both the architecture and the parameters of the machine-learning model further comprises, in at least one of the plurality of iterations, when the stopping condition is not satisfied, changing the learning rate prior to the next iteration.

Retraining each selected layer may comprise pruning the selected layer. The stopping condition may comprise a threshold indicating a measure of reduction in a size of the machine-learning model. Each selected layer may be retrained according to a learning rate, wherein jointly tuning both the architecture and the parameters of the machine-learning model further comprises, in each of the one or more iterations, when the stopping condition is not satisfied, reducing the learning rate prior to the next iteration.

Retraining the selected layer may comprise: selecting a plurality of alternative layers that each have a different size than the selected layer; training the plurality of alternative layers, using the training dataset, to minimize cross-entropy loss of the machine-learning model; and selecting one of the plurality of alternative layers, having a lowest measure of error, as the retrained layer. The cross-entropy loss may comprise negative log-likelihood loss, wherein the measure of error comprises mean squared error. Each of the plurality of alternative layers may have a smaller size than the selected layer. Each of the plurality of alternative layers may be selected to have a size, within a restricted search space around a size of the selected layer, that differs from the size of the selected layer and any other one of the plurality of alternative layers. Each of the plurality of alternative layers may have a smaller size than the selected layer, wherein the neural network is a convolutional neural network, and wherein the restricted search space is defined based on a number of filters to be pruned from the selected layer. The method may further comprise using the at least one hardware processor to determine the number of filters to be pruned using principal component analysis.

The tuned machine-learning model may estimate a location of a fault on a power line based on one or more measured parameters, wherein the training dataset comprises labeled feature vectors, and wherein each of the labeled feature vectors comprises a value for each of the one or more measured parameters and is labeled with a fault location, wherein the joint tuning comprises pruning the machine-learning model, wherein the second environment is a relay configured to trip a circuit breaker on the power line, and wherein deploying the tuned machine-learning model comprises installing the tuned machine-learning model in a controller of the relay.

It should be understood that any of the features in the methods above may be implemented individually or with any subset of the other features in any combination. Thus, to the extent that the appended claims would suggest particular dependencies between features, disclosed embodiments are not limited to these particular dependencies. Rather, any of the features described herein may be combined with any other feature described herein, or implemented without any one or more other features described herein, in any combination of features whatsoever. In addition, any of the methods, described above and elsewhere herein, may be embodied, individually or in any combination, in executable software modules of a processor-based system, such as a server, and/or in executable instructions stored in a non-transitory computer-readable medium.

## BRIEF DESCRIPTION OF THE DRAWINGS

The details of the present invention, both as to its structure and operation, may be gleaned in part by study of the accompanying drawings, in which like reference numerals refer to like parts, and in which:

FIG. 1 illustrates an example infrastructure, in which one or more of the processes described herein, may be implemented, according to an embodiment;
FIG. 2 illustrates an example processing system, by which one or more of the processes described herein, may be executed, according to an embodiment;
FIG. 3 illustrates the environment of a line protection system, according to an embodiment;
FIG. 4 illustrates a process for automated progressive tuning, according to an embodiment;
FIG. 5 illustrates an example of a tuning process for a layered machine-learning model, according to an embodiment;
FIG. 6 illustrates an example of a retraining process, according to an embodiment;
FIG. 7 illustrates the operation of a stopping condition and a gradually decreasing learning rate during automated progressive pruning, according to an embodiment;
FIG. 8 illustrates a process for making a trip decision, according to an embodiment;
FIGS. 9A-9D illustrate the blind zones achieved by various examples of machine-learning models for fault localization, according to experiments; and
FIG. 10 is a graph of the times of convergence for embodiments of automated progressive pruning and a brute-force method, according to experiments.

## DETAILED DESCRIPTION

In an embodiment, systems, methods, and non-transitory computer-readable media are disclosed for automated progressive tuning of a machine-learning model. After reading this description, it will become apparent to one skilled in the art how to implement the invention in various alternative embodiments and alternative applications. However, although various embodiments of the present invention will be described herein, it is understood that these embodiments are presented by way of example and illustration only, and not limitation. As such, this detailed description of various embodiments should not be construed to limit the scope or breadth of the present invention as set forth in the appended claims.

### 1. Example Infrastructure

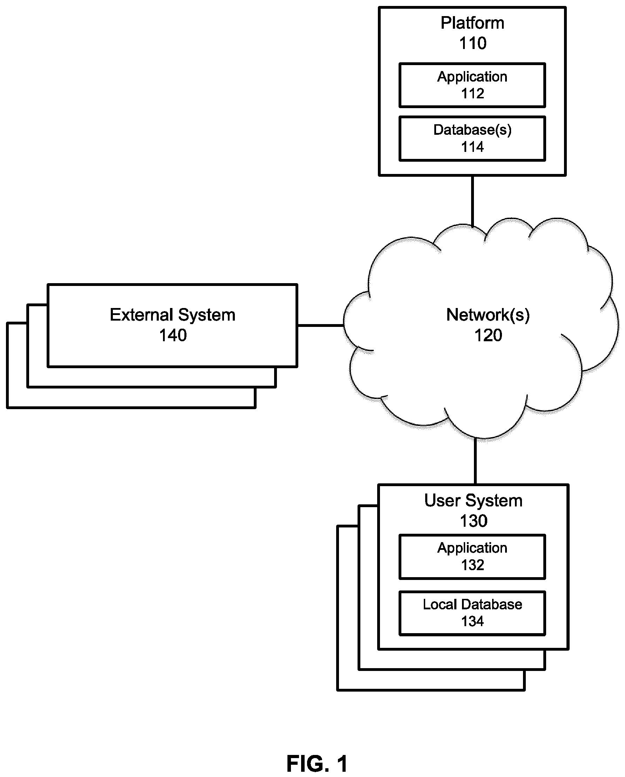

FIG. 1 illustrates an example infrastructure in which one or more of the disclosed processes may be implemented, according to an embodiment. The infrastructure may comprise a platform 110 (e.g., one or more servers) which hosts and/or executes one or more of the various functions, processes, methods, and/or software modules described herein. Platform 110 may comprise dedicated servers, or may instead be implemented in a computing cloud, in which the resources of one or more servers are dynamically and elastically allocated to multiple tenants based on demand. In either case, the servers may be collocated and/or geographically distributed. Platform 110 may also comprise or be communicatively connected to software 112 and/or one or more databases 114. In addition, platform 110 may be communicatively connected to one or more user systems 130 via one or more networks 120. Platform 110 may also be communicatively connected to one or more external systems 140 via one or more networks 120.

Network(s) 120 may comprise the Internet, and platform 110 may communicate with user system(s) 130 through the Internet using standard transmission protocols, such as HyperText Transfer Protocol (HTTP), HTTP Secure (HTTPS), File Transfer Protocol (FTP), FTP Secure (FTPS), Secure Shell FTP (SFTP), and the like, as well as proprietary protocols. While platform 110 is illustrated as being connected to various systems through a single set of network(s) 120, it should be understood that platform 110 may be connected to the various systems via different sets of one or more networks. For example, platform 110 may be connected to a subset of user systems 130 and/or external systems 140 via the Internet, but may be connected to one or more other user systems 130 and/or external systems 140 via an intranet. Furthermore, while only a few user systems 130 and external systems 140, one set of software 112, and one set of database(s) 114 are illustrated, it should be understood that the infrastructure may comprise any number of user systems, external systems, software applications, and databases.

User system(s) 130 may comprise any type or types of computing devices capable of wired and/or wireless communication, including without limitation, desktop computers, laptop computers, tablet computers, smart phones or other mobile phones, servers, game consoles, televisions, set-top boxes, electronic kiosks, point-of-sale terminals, and/or the like. However, it is generally contemplated that a user system 130 would comprise a personal computer or workstation of an agent of an organization responsible for designing a machine-learning model, such as the operator of a power system or the developer of line protection systems for power systems. Each user system 130 may comprise or be communicatively connected to a client application 132 and/or one or more local databases 134.

In an embodiment, external system(s) 140 may comprise one or more devices to which a machine-learning model, such as a neural network (e.g., CNN, DNN, etc.), is deployed. For example, an external system 130 may be a line protection system, comprising a relay for an overhead transmission line, or other protection system. While such a system could be any type of system performing any type of task, disclosed embodiments may be particularly beneficial for real-time systems with limited computational capacity, including, for example, limited processing resources, limited volatile and/or nonvolatile memory, and/or the like.

Platform 110 may comprise web servers which host one or more websites and/or web services. In embodiments in which a website is provided, the website may comprise a graphical user interface, including, for example, one or more screens (e.g., webpages) generated in HyperText Markup Language (HTML) or other language. Platform 110 transmits or serves one or more screens of the graphical user interface in response to requests from user system(s) 130. In some embodiments, these screens may be served in the form of a wizard, in which case two or more screens may be served in a sequential manner, and one or more of the sequential screens may depend on an interaction of the user or user system 130 with one or more preceding screens. The requests to platform 110 and the responses from platform 110, including the screens of the graphical user interface, may both be communicated through network(s) 120, which may include the Internet, using standard communication protocols (e.g., HTTP, HTTPS, etc.). These screens (e.g., webpages) may comprise a combination of content and elements, such as text, images, videos, animations, references (e.g., hyperlinks), frames, inputs (e.g., textboxes, text areas, checkboxes, radio buttons, drop-down menus, buttons, forms, etc.), scripts (e.g., JavaScript), and the like, including elements comprising or derived from data stored in one or more databases (e.g., database(s) 114) that are locally and/or remotely accessible to platform 110. It should be understood that platform 110 may also respond to other requests from user system(s) 130.

Platform 110 may comprise, be communicatively coupled with, or otherwise have access to one or more database(s) 114. For example, platform 110 may comprise one or more database servers which manage one or more databases 114. Software 112 executing on platform 110 and/or client application 132 executing on user system 130 may submit data (e.g., user data, form data, etc.) to be stored in database(s) 114, and/or request access to data stored in database(s) 114. Any suitable database may be utilized, including without limitation MySQL™, Oracle™, IBM™, Microsoft SQL™, Access™, PostgreSQL™, MongoDB™, and the like, including cloud-based databases and proprietary databases. Data may be sent to platform 110, for instance, using the well-known POST request supported by HTTP, via FTP, and/or the like. This data, as well as other requests, may be handled, for example, by server-side web technology, such as a servlet or other software module (e.g., comprised in software 112), executed by platform 110.

In embodiments in which a web service is provided, platform 110 may receive requests from external system(s) 140, and provide responses in eXtensible Markup Language (XML), JavaScript Object Notation (JSON), and/or any other suitable or desired format. In such embodiments, platform 110 may provide an application programming interface (API) which defines the manner in which user system(s) 130 and/or external system(s) 140 may interact with the web service. Thus, user system(s) 130 and/or external system(s) 140 (which may themselves be servers), can define their own user interfaces, and rely on the web service to implement or otherwise provide the backend processes, methods, functionality, storage, and/or the like, described herein. For example, in such an embodiment, a client application 132, executing on one or more user system(s) 130, may interact with software 112 executing on platform 110 to execute one or more or a portion of one or more of the various functions, processes, methods, and/or software modules described herein.

Client application 132 may be "thin," in which case processing is primarily carried out server-side by software 112 on platform 110. A basic example of a thin client application 132 is a browser application, which simply requests, receives, and renders webpages at user system(s) 130, while software 112 on platform 110 is responsible for generating the webpages and managing database functions. Alternatively, the client application may be "thick," in which case processing is primarily carried out client-side by user system(s) 130. It should be understood that client application 132 may perform an amount of processing, relative to software 112 on platform 110, at any point along this spectrum between "thin" and "thick," depending on the design goals of the particular implementation. In any case, the software described herein, which may wholly reside on either platform 110 (e.g., in which case software 112 performs all processing) or user system(s) 130 (e.g., in which case client application 132 performs all processing) or be distributed between platform 110 and user system(s) 130 (e.g., in which case software 112 and client application 132 both perform processing), can comprise one or more executable software modules comprising instructions that implement one or more of the processes, methods, or functions described herein.

2. Example Processing Device

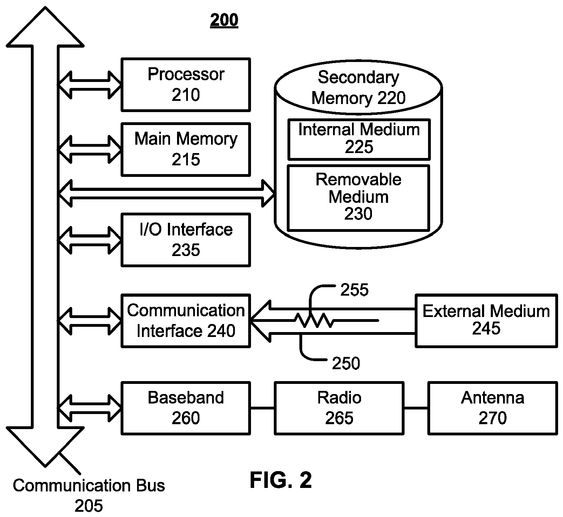

FIG. 2 is a block diagram illustrating an example wired or wireless system 200 that may be used in connection with various embodiments described herein. For example, system 200 may be used as or in conjunction with one or more of the functions, processes, or methods (e.g., to store and/or execute the software) described herein, and may represent components of platform 110, user system(s) 130, external system(s) 140 (e.g., line protection system), and/or other processing devices described herein. System 200 can be a server or any conventional personal computer, or any other processor-enabled device that is capable of wired or wireless data communication. Other computer systems and/or architectures may be also used, as will be clear to those skilled in the art.

System 200 preferably includes one or more processors 210. Processor(s) 210 may comprise a central processing unit (CPU). Additional processors may be provided, such as a graphics processing unit (GPU), an auxiliary processor to manage input/output, an auxiliary processor to perform floating-point mathematical operations, a special-purpose microprocessor having an architecture suitable for fast execution of signal-processing algorithms (e.g., digital-signal processor), a slave processor subordinate to the main processing system (e.g., back-end processor), an additional microprocessor or controller for dual or multiple processor systems, and/or a coprocessor. Such auxiliary processors may be discrete processors or may be integrated with processor 210. Examples of processors which may be used with system 200 include, without limitation, any of the processors (e.g., Pentium™, Core i7™, Xeon™, etc.) available from Intel Corporation of Santa Clara, California, any of the processors available from Advanced Micro Devices, Incorporated (AMD) of Santa Clara, California, any of the processors (e.g., A series, M series, etc.) available from Apple Inc. of Cupertino, any of the processors (e.g., Exynos™) available from Samsung Electronics Co., Ltd., of Seoul, South Korea, any of the processors available from NXP Semiconductors N.V. of Eindhoven, Netherlands, and/or the like.

Processor 210 is preferably connected to a communication bus 205. Communication bus 205 may include a data channel for facilitating information transfer between storage and other peripheral components of system 200. Furthermore, communication bus 205 may provide a set of signals used for communication with processor 210, including a data bus, address bus, and/or control bus (not shown). Communication bus 205 may comprise any standard or non-standard bus architecture such as, for example, bus architectures compliant with industry standard architecture (ISA), extended industry standard architecture (EISA), Micro Channel Architecture (MCA), peripheral component interconnect (PCI) local bus, standards promulgated by the Institute of Electrical and Electronics Engineers (IEEE) including IEEE 488 general-purpose interface bus (GPIB), IEEE 696/S-100, and/or the like.

System 200 preferably includes a main memory 215 and may also include a secondary memory 220. Main memory 215 provides storage of instructions and data for programs executing on processor 210, such as any of the software discussed herein. It should be understood that programs stored in the memory and executed by processor 210 may be written and/or compiled according to any suitable language, including without limitation C/C++, Java, JavaScript, Perl, Visual Basic, .NET, and the like. Main memory 215 is typically semiconductor-based memory such as dynamic random access memory (DRAM) and/or static random access memory (SRAM). Other semiconductor-based memory types include, for example, synchronous dynamic random access memory (SDRAM), Rambus dynamic random access memory (RDRAM), ferroelectric random access memory (FRAM), and the like, including read only memory (ROM).

Secondary memory 220 is a non-transitory computer-readable medium having computer-executable code (e.g., any of the software disclosed herein) and/or other data stored thereon. The computer software or data stored on secondary memory 220 is read into main memory 215 for execution by processor 210. Secondary memory 220 may include, for example, semiconductor-based memory, such as programmable read-only memory (PROM), erasable programmable read-only memory (EPROM), electrically erasable read-only memory (EEPROM), and flash memory (block-oriented memory similar to EEPROM).

Secondary memory 220 may optionally include an internal medium 225 and/or a removable medium 230. Removable medium 230 is read from and/or written to in any well-known manner. Removable storage medium 230 may be, for example, a magnetic tape drive, a compact disc (CD) drive, a digital versatile disc (DVD) drive, other optical drive, a flash memory drive, and/or the like.

In alternative embodiments, secondary memory 220 may include other similar means for allowing computer programs or other data or instructions to be loaded into system 200. Such means may include, for example, a communication interface 240, which allows software and data to be transferred from external storage medium 245 to system 200. Examples of external storage medium 245 include an external hard disk drive, an external optical drive, an external magneto-optical drive, and/or the like.

As mentioned above, system 200 may include a communication interface 240. Communication interface 240 allows software and data to be transferred between system 200 and external devices (e.g. printers), networks, or other information sources. For example, computer software or executable code may be transferred to system 200 from a network server (e.g., platform 110) via communication interface 240. Examples of communication interface 240 include a built-in network adapter, network interface card (NIC), Personal Computer Memory Card International Association (PCMCIA) network card, card bus network adapter, wireless network adapter, Universal Serial Bus (USB) network adapter, modem, a wireless data card, a communications port, an infrared interface, an IEEE 1394 fire-wire, and any other device capable of interfacing system 200 with a network (e.g., network(s) 120) or another computing device. Communication interface 240 preferably implements industry-promulgated protocol standards, such as Ethernet IEEE 802 standards, Fiber Channel, digital subscriber line (DSL), asynchronous digital subscriber line (ADSL), frame relay, asynchronous transfer mode (ATM), integrated digital services network (ISDN), personal communications services (PCS), transmission control protocol/Internet protocol (TCP/IP), serial line Internet protocol/point to point protocol (SLIP/PPP), and so on, but may also implement customized or non-standard interface protocols as well.

Software and data transferred via communication interface 240 are generally in the form of electrical communication signals 255. These signals 255 may be provided to communication interface 240 via a communication channel 250. In an embodiment, communication channel 250 may be a wired or wireless network (e.g., network(s) 120), or any variety of other communication links. Communication channel 250 carries signals 255 and can be implemented using a variety of wired or wireless communication means including wire or cable, fiber optics, conventional phone line, cellular phone link, wireless data communication link, radio frequency ("RF") link, or infrared link, just to name a few.

Computer-executable code (e.g., computer programs, such as the disclosed software) is stored in main memory 215 and/or secondary memory 220. Computer-executable code can also be received via communication interface 240 and stored in main memory 215 and/or secondary memory 220. Such computer programs, when executed, enable system 200 to perform the various functions of the disclosed embodiments as described elsewhere herein.

In this description, the term "computer-readable medium" is used to refer to any non-transitory computer-readable storage media used to provide computer-executable code and/or other data to or within system 200. Examples of such media include main memory 215, secondary memory 220 (including internal memory 225 and/or removable medium 230), external storage medium 245, and any peripheral device communicatively coupled with communication interface 240 (including a network information server or other network device). These non-transitory computer-readable media are means for providing software and/or other data to system 200.

In an embodiment that is implemented using software, the software may be stored on a computer-readable medium and loaded into system 200 by way of removable medium 230, I/O interface 235, or communication interface 240. In such an embodiment, the software is loaded into system 200 in the form of electrical communication signals 255. The software, when executed by processor 210, preferably causes processor 210 to perform one or more of the processes and functions described elsewhere herein.

In an embodiment, I/O interface 235 provides an interface between one or more components of system 200 and one or more input and/or output devices. Example input devices include, without limitation, sensors, keyboards, touch screens or other touch-sensitive devices, cameras, biometric sensing devices, computer mice, trackballs, pen-based pointing devices, and/or the like. Examples of output devices include, without limitation, other processing devices, cathode ray tubes (CRTs), plasma displays, light-emitting diode (LED) displays, liquid crystal displays (LCDs), printers, vacuum fluorescent displays (VFDs), surface-conduction electron-emitter displays (SEDs), field emission displays (FEDs), and/or the like. In some cases, an input and output device may be combined, such as in the case of a touch panel display (e.g., in a smartphone, tablet, or other mobile device).

System 200 may also include optional wireless communication components that facilitate wireless communication over a voice network and/or a data network (e.g., in the case of user system 130). The wireless communication components comprise an antenna system 270, a radio system 265, and a baseband system 260. In system 200, radio frequency (RF) signals are transmitted and received over the air by antenna system 270 under the management of radio system 265.

In an embodiment, antenna system 270 may comprise one or more antennae and one or more multiplexors (not shown) that perform a switching function to provide antenna system 270 with transmit and receive signal paths. In the receive path, received RF signals can be coupled from a multiplexor to a low noise amplifier (not shown) that amplifies the received RF signal and sends the amplified signal to radio system 265.

In an alternative embodiment, radio system 265 may comprise one or more radios that are configured to communicate over various frequencies. In an embodiment, radio system 265 may combine a demodulator (not shown) and modulator (not shown) in one integrated circuit (IC). The demodulator and modulator can also be separate components. In the incoming path, the demodulator strips away the RF carrier signal leaving a baseband receive audio signal, which is sent from radio system 265 to baseband system 260.

If the received signal contains audio information, then baseband system 260 decodes the signal and converts it to an analog signal. Then the signal is amplified and sent to a speaker. Baseband system 260 also receives analog audio signals from a microphone. These analog audio signals are converted to digital signals and encoded by baseband system 260. Baseband system 260 also encodes the digital signals for transmission and generates a baseband transmit audio signal that is routed to the modulator portion of radio system 265. The modulator mixes the baseband transmit audio signal with an RF carrier signal, generating an RF transmit signal that is routed to antenna system 270 and may pass through a power amplifier (not shown). The power amplifier amplifies the RF transmit signal and routes it to antenna system 270, where the signal is switched to the antenna port for transmission.

Baseband system 260 is also communicatively coupled with processor(s) 210. Processor(s) 210 may have access to data storage areas 215 and 220. Processor(s) 210 are preferably configured to execute instructions (i.e., computer programs, such as the disclosed software) that can be stored in main memory 215 or secondary memory 220. Computer programs can also be received from baseband processor 260 and stored in main memory 210 or in secondary memory 220, or executed upon receipt. Such computer programs, when executed, can enable system 200 to perform various functions of the disclosed embodiments.

3. Example Line Protection System

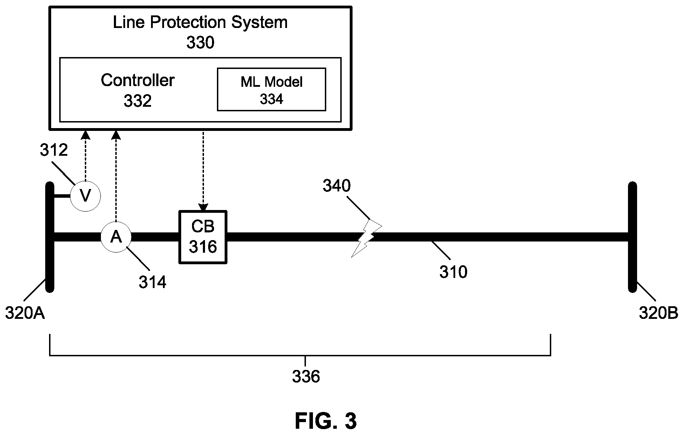

FIG. 3 illustrates the operation of a line protection system 330, according to an embodiment. Line protection system 330 is one example of an external system 140, to which a machine-learning model, developed on platform 110, may be deployed. An electrical power line 310 may be provided between two substations 320A and 320B. One or more voltage measurement units 312 may measure voltage on power line 310 and output the voltage measurements to line protection system 330. In addition, one or more current measurement units 314 may measure current on power line 310 and output the current measurements to line protection system 330.

Line protection system 330 may comprise a controller 332, which may implement system 200 or some subset thereof. For example, controller 332 may comprise one or more processors 210 and store a machine-learning model 334 in memory (e.g., main memory 215 and/or secondary memory 220). Controller 332 may receive the voltage measurements from voltage measurement unit(s) 312, the current measurements from current measurement unit(s) 314, and/or other measurements from one or more other sensors or devices related to power line 310. Controller 332 could also derive one or more additional measurements from the received measurements.

Controller 332 may apply machine-learning model 334 to the measurements as part of a time domain protection scheme. For example, the measurements may be input to machine-learning model 334 to estimate a location of a fault 340 or output a decision of whether or not to trip (i.e., open) a circuit breaker 316 on power line 310. If the location of fault 340 is within a protection zone, defined by a reach setting 336, of line protection system 330, controller 332 may determine to trip circuit breaker 316 (i.e., switch circuit breaker 316 to an open state). Otherwise, controller 332 may determine not to trip circuit breaker 316 (i.e., maintain circuit breaker 316 in a closed state). When controller 332 determines to trip circuit breaker 316, controller 332 may send a control signal to circuit breaker 316 (e.g., directly or via a relay controlling circuit breaker 316) to open circuit breaker 316 and thereby isolate fault 340 from substation 320A. It should be understood that there may be a similar line protection system 330 on the other end of power line 110 that performs the same function to isolate fault 340 from substation 320B, if the location of fault 340 is within its respective protection zone.

4. Automated Progressive Tuning

A method of automated progressive tuning (APT) will now be described in detail. In an embodiment, automated progressive tuning trains a machine-learning model with joint learning of the architecture and the parameters of the machine-learning model. In the case of a layered machine-learning model, such as a neural network, this joint training may iterate over individual layers of the machine-learning model until a stopping condition is satisfied. It should be understood that the term "joint," in the context of "joint tuning," "joint learning," "joint training," and the like, refers to the tuning, learning, training, or the like, of the architecture of the machine-learning model at the same time as the parameters of the machine-learning model. This is in contrast, for example, to learning the parameters while the architecture is fixed, or learning the architecture while the parameters are fixed. One objective of automated progressive tuning is to address the limitation, faced by conventional tuning methods, of a restricted architecture. The disclosed automated progressive tuning can be used for environment-specific tuning that is less costly and faster than conventional tuning methods, such as neural architecture search (NAS), which search for optimal architectures for generic tasks and are known to often be very costly and slow.

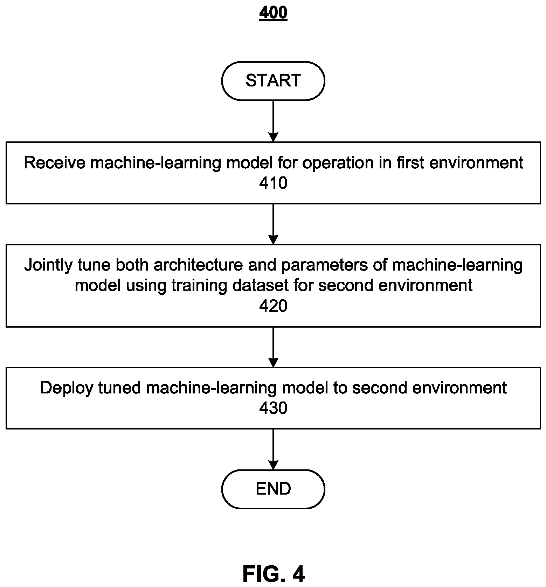

FIG. 4 illustrates a process 400 for automated progressive tuning, according to an embodiment. It should be understood that process 400 may be embodied in one or more software modules that are executed by one or more hardware processors (e.g., processor 210), for example, as a software application (e.g., software 112, client application 132, and/or a distributed application comprising both software 112 and client application 132), which may be executed wholly by processor(s) of platform 110, wholly by processor(s) of user system(s) 130, or may be distributed across platform 110 and user system(s) 130, such that some portions or modules of the software application are executed by platform 110 and other portions or modules of the software application are executed by user system(s) 130. The described processes may be implemented as instructions represented in source code, object code, and/or machine code. These instructions may be executed directly by hardware processor(s) 210, or alternatively, may be executed by a virtual machine operating between the object code and hardware processor(s) 210. In addition, the disclosed software may be built upon or interfaced with one or more existing systems.

Alternatively, the described processes may be implemented as a hardware component (e.g., general-purpose processor, integrated circuit (IC), application-specific integrated circuit (ASIC), digital signal processor (DSP), field-programmable gate array (FPGA) or other programmable logic device, discrete gate or transistor logic, etc.), combination of hardware components, or combination of hardware and software components. To clearly illustrate the interchangeability of hardware and software, various illustrative components, blocks, modules, circuits, and steps are described herein generally in terms of their functionality. Whether such functionality is implemented as hardware or software depends upon the particular application and design constraints imposed on the overall system. Skilled persons can implement the described functionality in varying ways for each particular application, but such implementation decisions should not be interpreted as causing a departure from the scope of the invention. In addition, the grouping of functions within a component, block, module, circuit, or step is for ease of description. Specific functions or steps can be moved from one component, block, module, circuit, or step to another without departing from the invention.

Furthermore, while process 400 is illustrated with a certain arrangement and ordering of subprocesses, process 400 may be implemented with fewer, more, or different subprocesses and a different arrangement and/or ordering of subprocesses. In addition, it should be understood that any subprocess, which does not depend on the completion of another subprocess, may be executed before, after, or in parallel with that other independent subprocess, even if the subprocesses are described or illustrated in a particular order.

Initially, in subprocess 410 a machine-learning model, with an architecture and parameters that have been trained for operation in a first environment, is received. The machine-learning model may be an artificial neural network, which may be referred to herein simply as a "neural network." A neural network is any collection of connected units or nodes, called "neurons," which loosely model the neurons in a biological brain in that they signal other neurons via connections, called "edges." As examples, the neural network may be a convolutional neural network (CNN) and/or a deep neural network (DNN). A convolutional neural network is a specialized type of neural network that comprises an input layer, one or more hidden layers, and an output layer, and uses convolution in place of general matrix multiplication in at least one of the layers. A deep neural network is any neural network that comprises a plurality of hidden layers. Thus, a convolutional neural network may be a deep neural network, and vice versa. However, it should be understood that the machine-learning model may comprise other types of neural networks, such as a recurrent neural network (RNN), and/or other types of models, such as a generalized linear model, spline interpolation model, or the like.

In subprocess 420, both the architecture and the parameters of the machine-learning model, received in subprocess 410, are jointly tuned using a training dataset for a second environment. While not a necessity, it is generally contemplated that the second environment would be different from the first environment. Even when the environments are different, the task being performed in each environment may be the same. For example, the first environment may be a first input-output data distribution for a task, whereas the second environment may be a second input-output data distribution for the same task, but which is different from the first input-output data distribution. As another example, the first environment may be a relatively computationally rich environment (e.g., a server-based platform, such as platform 110), whereas the second environment may be a relatively computationally poor environment (e.g., an embedded system, such as line protection system 330, a mobile system, such as a smartphone, an Internet of Things (IoT) device, etc.) with significantly lower computational capacity than the first environment. In this case, subprocess 420 may comprise pruning to reduce the size of the machine-learning model, as discussed in more detail elsewhere herein. Differences in computational capacity may include differences in processing resources, memory resources, available power (e.g., plugged-in vs. battery-powered), network bandwidth, and/or the like.

In subprocess 430, the tuned machine-learning model is deployed to the second environment. Subprocess 430 may comprise installing the tuned machine-learning model on one or more external systems 140. For example, the tuned machine-learning model may be trained to determine a fault location on a power line based on measurements (e.g., voltage and/or current) of the power line, and external system(s) 140 may comprise one or more line protection systems 330. In this case, the tuned, and preferably pruned, machine-learning model may be installed into a memory (e.g., main memory 215 and/or secondary memory 220) of controller 332 of line protection system 330. It should be understood that the machine-learning model may be trained and tuned for any other task and/or deployed to any other type of external system 140 in a similar manner.

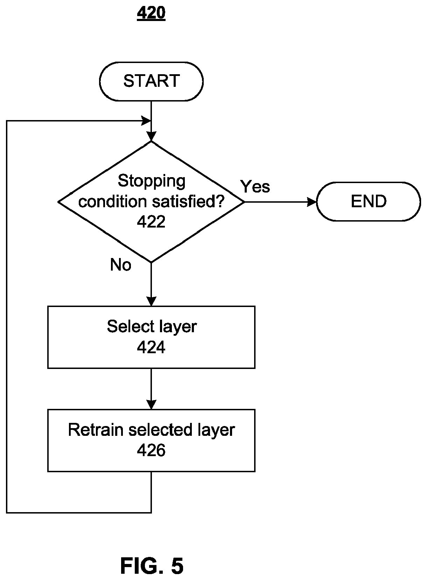

FIG. 5 illustrates an example of subprocess 420 for a layered machine-learning model, according to an embodiment. In the illustrated example, the joint tuning of both the architecture and parameters of the machine-learning model is progressive in that it tunes the machine-learning model layer by layer until a stopping condition is satisfied. Again, an example of a layered machine-learning model includes, without limitation, a convolutional neural network, a deep neural network, a recurrent neural network, and many other types of neural networks.

In subprocess 422, it is determined whether or not a stopping condition is satisfied. The stopping condition may comprise one or more stopping criteria, which may be defined according to the objective(s) of the particular tuning process. For example, in the event that the tuning comprising pruning, the stopping condition may be the satisfaction of a threshold by a measure of reduction in the size of the machine-learning model. As alternative examples, the stopping condition may comprise another metric of the tuned machine-learning model satisfying a threshold, a number of iterations exceeding a predefined number of epochs, the reception of a user operation (e.g., terminating the tuning via a graphical user interface provided by software 112), the expiration of a timer, and/or the like. In any case, if the stopping condition is not satisfied (i.e., "No" in subprocess 422), subprocess 420 proceeds to subprocess 424. Otherwise, if the stopping condition is satisfied (i.e., "Yes" in subprocess 422), subprocess 420 may end (e.g., and proceed to subprocess 430).

In subprocess 424, a new layer is selected for tuning. In particular, one of a plurality of layers in the machine-learning model (e.g., neural network) that has not been retrained in any prior iteration of subprocess 426 may be selected. In an embodiment, the plurality of layers may be trained in a defined order from one of the plurality of layers that is closest to an output (i.e., furthest from an input) of the machine-learning model, which may be referred to as the "topmost" layer, to one of the plurality of layers that is closest to an input (i.e., furthest from an output) of the machine-learning model, which may be referred to as the "bottommost" layer. In an alternative embodiment, the plurality of layers may be trained in an order from the bottommost layer to the topmost layer. In an alternative embodiment, the plurality of layers may be trained from some higher layer (e.g., other than the topmost layer) to some lower layer (e.g., other than the bottommost layer), or from some lower layer to some higher layer. In yet another alternative, the plurality of layers may be trained in another order (e.g., every $N$-th layer from a higher layer to a lower layer or from a lower layer to a higher layer, according to priorities assigned to the layers, etc.) or in random order. As yet another alternative, the layer may be selected in each iteration of subprocess 424 according to one or more selection criteria. In this case, the selection criteria may comprise a measure of importance or other attribute of the layer being a minimum or maximum relative to all layers that have not been retrained in any prior iteration of subprocess 426.

In subprocess 426, the layer, selected in subprocess 424, is retrained. The retraining in subprocess 426 comprises jointly retraining both the architecture and the parameters of the layer. In other words, both the architecture and the parameters of the layer may change during the retraining. In an embodiment, this retraining may comprise pruning, in which case the size of the layer is reduced in at least one dimension. Once the layer has been retrained, subprocess 420 returns to subprocess 422 to determine whether or not the stopping condition has been satisfied following the retraining.

Each layer may be retrained in subprocess 426 according to a learning rate. In an embodiment, after a layer has been retrained in subprocess 426 and the stopping condition has still not been satisfied in subprocess 422, the learning rate may be changed prior to the next iteration of subprocess 424 or 426. For example, in the event that the retraining comprises pruning, the learning rate may be reduced prior to the next iteration, according to a decay function. Alternatively, the learning rate could be increased prior to the next iteration. As another alternative, the learning rate could be kept constant across all iterations. As yet another alternative, the learning rate may be varied up or down or remain the same for each iteration, depending on one or more criteria or patterns.

The algorithm below represents example pseudocode for one embodiment of subprocess 420 for automated progressive tuning:

| Example Algorithm for Automated Progressive Tuning |
| --- |
| Input |
| existingM:        existing machine-learning model |
| X:                input data |
| y:                target labels |
| n:                number of alternative layers to consider |
| threshold:        threshold on stopping metric |
| iterMax:          maximum number of iterations |
| tolerance:        tolerance |
| freezing:         Boolean, indicating whether or not to freeze other layers |
| alphaVary:        Boolean, indicating whether or not to vary learning rate |
| trainingMethods:  training methods |

```
Output
tunedM:                tuned machine-learning model


Initialization
    err ← largeInitialValue
    iter = 0
    layers ← list of indices of layers in existingM
    layer ← length(layers[: -1]-1)
Deserialize existingM
while err > tolerance or iter < iterMax
    if layer==0 then break
    else if layer ∈ layers then
        layer ← [layers[layer],layers[layer+1]]
        tunedM ← ModelProgressiveTuning(X,y,existingM,layer,n)
        for trainingMethod ∈ trainingMethods do
            tunedM ← tunedM.trainingMethod(X,y,freezing,alphaVary)
        end
        Serialize tunedM
        stoppingMetric ← calculate stopping metric
        err ← |stoppingMetric-threshold|
    else continue
    end
    iter ← iter + 1
    layer ← layer - 1
end
return tunedM
```

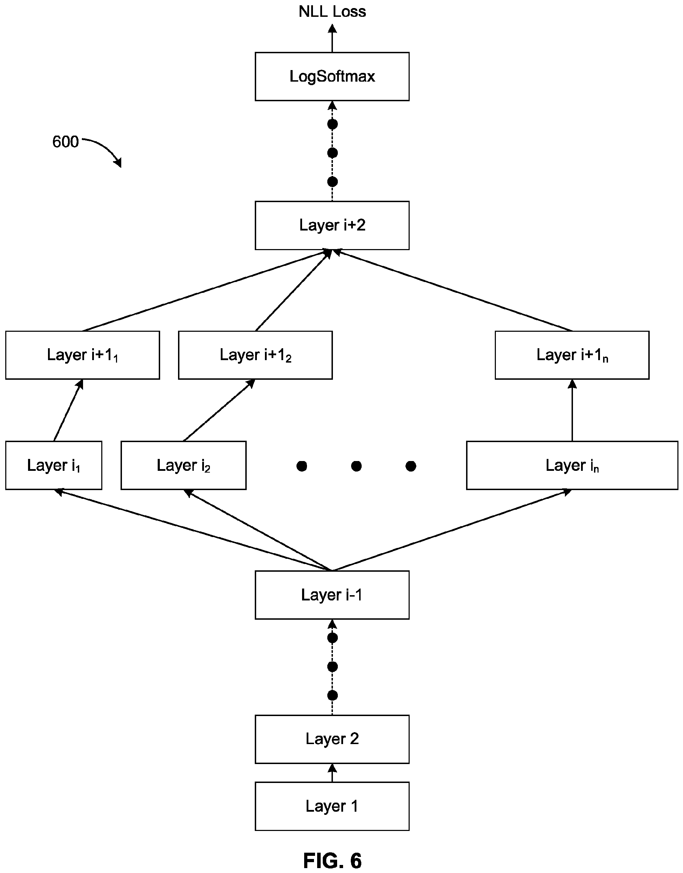

FIG. 6 illustrates an example of the retraining in subprocess 426, according to an embodiment. In the illustrated example, a layer *i* of a neural network 600 is being retrained during an iteration of subprocess 426. While neural network 600 is illustrated as comprising at least a certain number of layers, it should be understood that neural network 600 may comprise any number of layers, including fewer or more layers than illustrated. In addition, the layer being retrained may be any layer of neural network 600. For example, while particular implementations may retrain the convolutional layers of a convolutional neural network, the same retraining could be performed for other layers of a convolutional neural network or other neural networks, such as gated recurrent units (GRUs) (e.g., in a recurrent neural network), fully connected (FC) layers, and/or the like.

Layer *i* of the existing neural network 600 has a certain size, which may be defined as a number of units, or filters in the context of a convolutional neural network. In an embodiment, tuning the architecture of layer *i* comprises changing the number of input and output units, as well as the number of input units of the subsequent layer *i* + 1. To do this, subprocess 426 may select a plurality of alternative layers that each has a size, within a restricted search space around the size of the existing layer $i$, that differs from the size of existing layer $i$ and each other. In the illustrated example, the plurality of alternative layers are represented as layer $i + 1_1$, layer $i + 1_2$, ... layer $i + 1_n$, which each have a different size. The number $n$ of alternative layers may be a predefined number greater than one. Each of these plurality of alternative layers represents a different trainable path from layer $i - 1$ to layer $i + 1$, with each trainable path having a different set of simultaneously learnable input-output structures.

In an embodiment in which subprocess 426 is pruning layer $i$, the restricted search space may be defined based on a number of units (e.g., number of filters) to be pruned from layer $i$. In this case, all of the alternative layers will have a smaller size than existing layer $i$. In an embodiment, the number of units to be pruned may be determined using principal component analysis (PCA). Principal component analysis can be used to compute the principal components of layer $i$, and the search space may be defined to include a number of units from and including the number of principal components up to but excluding the number of units in existing layer $i$.

In subprocess 426, the plurality of alternative layers may be trained, using the training dataset for the second environment, to minimize cross-entropy loss of the machine-learning model (e.g., neural network 600). For joint tuning of the architecture and parameters of the machine-learning model, the cross-entropy loss may be added with the mean squared error (MSE) loss for the overall machine-learning model for the task (e.g., regression task for fault localization). To this end, the following joint optimization problem may be solved:

Equation (1):

$$\min_{\omega,\theta} \mathcal{L}\big(y - f_{\omega,\theta}(X)\big)$$

wherein $\mathcal{L}(\cdot)$ represents the loss function, X are the input data (e.g., represented as a matrix), $y$ are the target labels (e.g., represented as a vector), $f_{\omega,\theta}$ is the learnable machine-learning model, $\omega$ is a parameter representing the architecture, and $\theta$ is a parameter representing the model parameters for architecture $\omega$.

The training loss can be expanded as follows:

Equation (2):

$$\mathcal{L}\big(y - f_{\omega,\theta}(X)\big) :=$$
$$\beta_1 \, NLL\left(logsoftmax\left(MSE\big(y, f_{\omega,\theta}(X)\big)\right), y_{class}\right) + \beta_2 \, \mathbb{E}_\omega\left(MSE\big(y, f_{\omega,\theta}(X)\big)\right)$$

wherein $NLL(\cdot)$ represents the negative log-likelihood loss, and $MSE(\cdot)$ represents the mean squared error. $\beta_1$ and $\beta_2$ are hyperparameters, which each have a value that is greater than zero, representing the relative importance of learning the architecture and parameters. The values of $\beta_1$ and $\beta_2$ may be varied according to the needs of the application. For example, $\beta_1 = 1.0$ and $\beta_2 = 1.5$ will focus the optimization problem on reducing the mean MSE value of the estimation.

The architecture parameter $\omega$ refers to the number of learnable alternative layers. Consequently, $\mathbb{E}_\omega\left(MSE\big(y, f_{\omega,\theta}(X)\big)\right)$ represents the mean MSE value from all of the alternative layers.

The targets $y_{class}$ for the $NLL$ classifier may be obtained as follows:

Equation (3):

$$y_{class} = \mathrm{argmin}_\omega\left(MSE\big(y, f_{\omega,\theta}(X)\big)\right)$$

Notably, instead of a continuous parameterization $\omega$ of the architecture, in an embodiment, a discrete set of sizes for the alternative layers is used as the architecture parameter $\omega$. Thus, the training loss is used to learn the architecture as a classification loss. In particular, the negative log-likelihood loss of MSE losses, obtained by the alternative layers (i.e., different architectures), is used as the overall training loss. During retraining of layer $i$ in subprocess 426, the other layers get more updates towards the alternative layer that renders the lowest MSE among all of the plurality of alternative layers. The one of the plurality of alternative layers that renders the lowest cross-entropy loss may be selected as the new architecture for layer *i*.

Over iterations of subprocess 426, the learning rate may be varied or kept constant. In an embodiment, the retraining in subprocess 420 progresses from a layer near the top (e.g., the topmost layer, last convolutional layer in a convolutional neural network, or other higher layer) towards a layer near the bottom (e.g., the bottommost layer, first convolutional layer in a convolutional neural network, or other lower layer), with a gradually decreasing learning rate. In other words, higher layers are tuned more aggressively than lower layers. The learning rate may decay linearly in each iteration. Alternatively, the learning rate may decay according to other suitable profiles, including non-linear profiles. As another alternative, the learning rate may gradually increase, linearly or non-linearly. As yet another alternative, the learning rate may remain constant across all iterations of subprocess 426. As even yet another alternative, the learning rate may decrease, increase, or remain constant, from iteration to iteration, depending on one or more criteria.

In some applications (e.g., when the existing machine-learning model is very large), it may suffice to stop the tuning before reaching the bottommost layer in the sequence of layers to be trained, for example, if the size of the tuned machine-learning model at that point satisfies some pruning objective. In this case, it would be wasteful to continue retraining layers. Accordingly, subprocess 422 may be used to define a stopping condition that stops the tuning once one or more stopping criteria are met, even if only a portion of the layers have been retrained.

5. Automated Progressive Pruning

A straightforward method of producing a smaller, dense machine-learning model using conventional methods is to define the architecture as a hyperparameter, and tune the architecture using methods for tuning hyperparameters. However, when drastically reducing the size of the machine-learning model (e.g., from a very large existing machine-learning model to a very small machine-learning model), such methods are costly and wasteful, since they retrain all of the layers for all of the candidate architectures.

Thus, in an embodiment, the automated progressive tuning of process 400 is used to prune an existing machine-learning model by adding a constraint on at least one dimension of the existing machine-learning model. In particular, at least one dimension of the tuned machine-learning model is constrained to be strictly less than that dimension in the existing machine-learning model. As an example for a convolutional neural network, the dimension may be the kernel and filter size or number of filters in the layers in the convolutional neural network. Advantageously, pruning by process 400 can produce a smaller, dense machine-learning model without the costly and wasteful retraining of the straightforward method described above. Pruning by the automated progressive tuning of process 400 is referred to herein as automated progressive pruning (APP).

In an embodiment of automated progressive pruning, the stopping condition in subprocess 422 may be that a measure of reduction in size of at least one dimension, from the existing machine-learning model to the tuned machine-learning model, satisfies a threshold. The measure of reduction may be a measure of overall size reduction, such as the ratio of the number of parameters of the tuned machine-learning model to the number of parameters of the existing machine-learning model, in which case, the stopping condition may be satisfied when the ratio falls below a threshold. Alternatively, the measure of reduction in size may be the radius of a circular neighborhood around the desired number of parameters in the final tuned machine-learning model, in which case the stopping condition may be satisfied when the radius falls below a threshold.

The algorithm below represents example pseudocode for one embodiment of automated progressive pruning:

| Example Algorithm for Automated Progressive Pruning |
|---|

```
Input
existingM:          existing machine-learning model
X:                  input data
y:                  target labels
n:                  number of alternative layers to consider
rth:                threshold on ratio of parameter counts
iterMax:            maximum number of iterations
tolerance:          tolerance
freezing:           Boolean, indicating whether or not to freeze other layers
alphaDecay:         Boolean, indicating whether or not to decay learning rate
trainingMethods:    training methods


Output
prunedM:            pruned machine-learning model
```

```
Initialization
    paramcountPrev ← prunedM.paramscount()
    err ← 1.0
    iter = 0
    layers ← list of indices of layers in existingM
    layer ← length(layers[: -1]-1)
Deserialize existingM
while err > tolerance or iter < iterMax
    if layer==0 then break
    else if layer ϵ layers then
        layer ← [layers[layer],layers[layer+1]]
        prunedM ← ModelProgressivePruning(X,y,existingM,layer,n)
        for trainingMethod ϵ trainingMethods do
            prunedM ← prunedM.trainingMethod(X,y,freezing,alphaDecay)
        end
        Serialize prunedM
        paramcountPruned ← prunedM.paramcount()
        r ← paramcountPruned/paramcountPrev
        paramcountPrev ← paramcountPruned
        err ← |r-rth|
    else continue
    end
    iter ← iter + 1
    layer ← layer – 1
end
return prunedM
```

In contrast to conventional methods, an embodiment of automated progressive pruning starts with an existing machine-learning model, and jointly learns the architecture, along with the model parameters, in an iterative or progressive manner. Instead of decoupling the learning of the architecture and the optimization of the parameters and adopting a search of the architecture, which can be costly and slow, automated progressive pruning changes at least one dimension of the existing architecture while optimizing the parameters. Thus, automated progressive pruning addresses the limitation of conventional methods that reuse the same architecture of the existing machine-learning model.

In an embodiment, the tuning in subprocess 420 starts with a higher layer (i.e., closer to the output of the machine-learning model) and, with each iteration, proceeds towards a lower layer (i.e., closer to the input of the machine-learning model). After each iteration, the learning rate may be reduced prior to the next iteration. The learning rate may be reduced gradually according to some algorithm. This gradual reduction in the learning rate is due to the recognition by the inventors that higher layers (i.e., closer to the output of the machine-learning model) are more likely to be redundant than lower layers (i.e., closer to the input of the machine-learning model) for achieving the task of the machine-learning model. Therefore, higher layers can be pruned more aggressively, whereas the role of the lower layers is mainly to embed the input data, which requires dense connectivity for effective embedding.

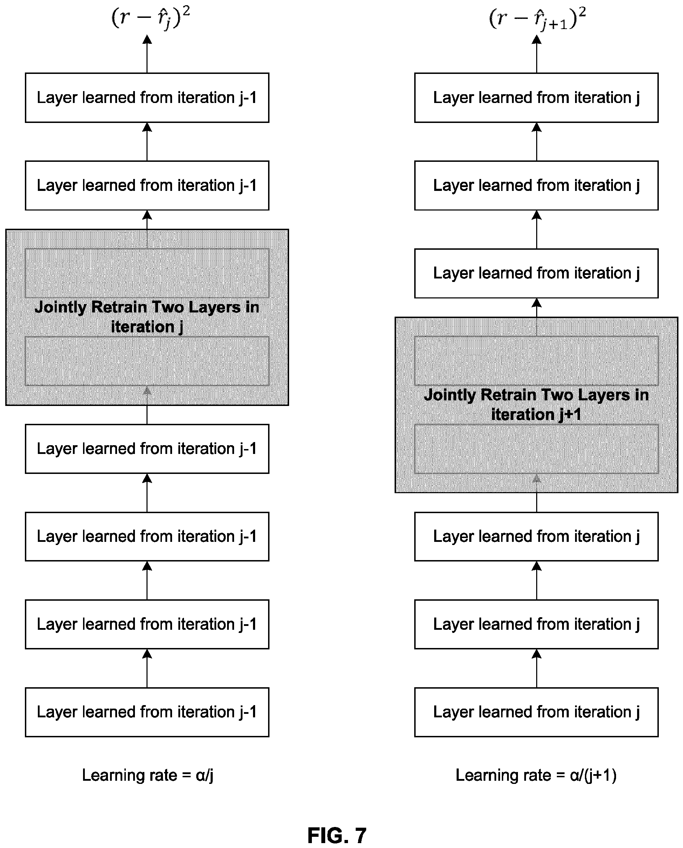

FIG. 7 illustrates the operation of a stopping condition and a gradually decreasing learning rate during automated progressive pruning, according to an embodiment. In this illustration, it is assumed that subprocess 420 iterates from a higher layer to a lower layer. In iteration *j* of subprocess 420, a layer (e.g., layer *i* in FIG. 6) is selected in subprocess 424, and the architecture and parameters of two layers (e.g., layer *i* and layer *i* + 1 in FIG. 6) are jointly retrained in subprocess 426, according to a learning rate $\alpha/j$, wherein $\alpha$ is an initial learning rate. After the retraining in subprocess 426, a measure of reduction $\hat{r}_j$ is calculated for the next iteration of subprocess 422. The stopping condition may be satisfied in subprocess 422 when:

Equation (4):

$$\left(r - \hat{r}_j\right)^2 < \varepsilon$$

wherein *r* is the target value for the measure of reduction, and $\varepsilon$ is a tolerance. The definition of the measure of reduction may vary with the requirements for a particular application. Generally, the measure of reduction can be defined as a function of the machine-learning model as:

Equation (5):

$$r := g\left(f_{\omega,\theta}(X)\right)$$

wherein $g(\cdot)$ is a function (e.g., specified by a user via a graphical user interface provided by software 112) that depends on the particular application. One example of the measure of reduction is the ratio of the number of parameters of the tuned machine-learning model to the number of parameters of the existing machine-learning model. In this case, *r* represents the target value of the ratio, and $\hat{r}_j$ represents the actual value of the ratio after iteration *j*.

Assuming that $(r - \hat{r}_j)^2$ is not less than tolerance $\varepsilon$ after iteration j, the stopping condition is not satisfied in subprocess 422. Thus, the learning rate is decreased to $\alpha/(j + 1)$ for iteration *j* + 1. Then, in iteration *j* + 1, a new layer (e.g., layer *i* - 1 in FIG. 6) is selected in subprocess 424, and the architecture and parameters of two layers (e.g., layer *i* - 1 and layer *i* in FIG. 6) are jointly retrained in subprocess 426. At the end of the joint retraining in iteration *j* + 1, the measure of reduction $\hat{r}_{j+1}$ is calculated and the value of $(r - \hat{r}_{j+1})^2$ is comparted to tolerance $\varepsilon$ in another iteration of subprocess 422. This continues until either $(r - \hat{r}_j)^2 < \varepsilon$ or there are no more layers remaining to be retrained (i.e., "Yes" in subprocess 422).

The overall training can be viewed as a bi-level optimization, given by:

$$\min((r - \hat{r})^2)$$

wherein

$$\hat{r} := g(f_{\omega^*,\theta^*}(X))$$

wherein $f_{\omega^*,\theta^*}$ is a trained machine-learning model obtained by Equation (1).

6. <u>Example Use Case</u>

In an embodiment, the tuned machine-learning model, produced by subprocess 420, may be deployed as machine-learning model 334 in controller 332 of line protection system 330. In this case, machine-learning model 334 may be a convolutional neural network, which generally suffices for fault localization. Convolutional neural networks can efficiently embed time series data to successfully learn labels, such as fault locations (e.g., fault distances), and offer enhanced interpretability relative to other machine-learning models, by virtue of filtering operations performed by one-dimensional convolutional layers. Relative to NAS methods, process 400 is much faster and more transparent.

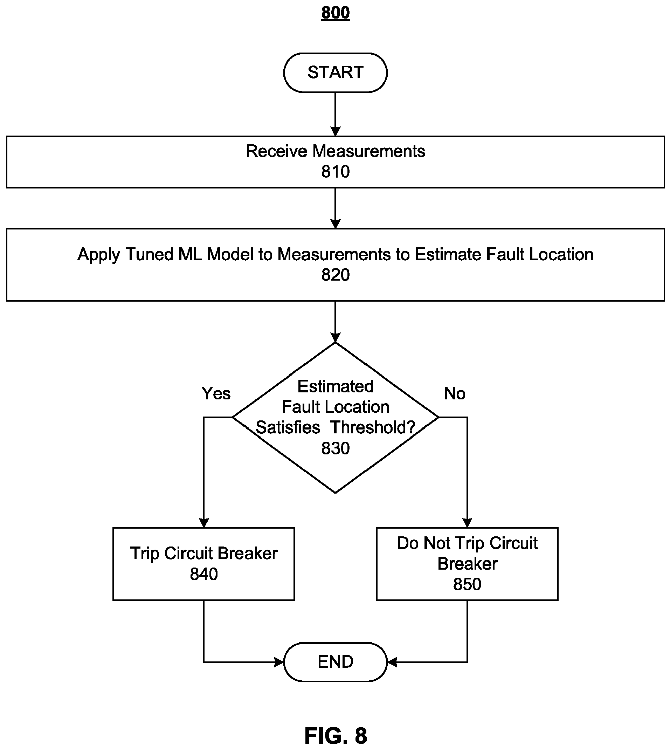

FIG. 8 illustrates a process 800 for making a trip decision, according to an embodiment in which a machine-learning model for a more computationally rich environment is pruned by process 400 into machine-learning model 334, and deployed to the computationally poorer environment of line protection system 330 to estimate the location of a fault. In subprocess 810, controller 332 of line protection system 330, acting as a protection device, may receive measurements signals from a plurality of sensors connected to power line 310. For example, these measurement signals may comprise or consist of values of voltage measured by voltage measurement unit 312 and current measured by current measurement unit 314. In subprocess 820, controller 332 may apply the tuned machine-learning model 334 to the measurement signals to estimate a location of a fault 340 on power line 310. Then, in subprocess 830, controller 332 may compare the estimated fault location to a predetermined threshold, representing reach setting 336. For example, controller 332 may determine whether the estimated fault location is less than or equal to reach setting 336. When determining that the estimated fault location satisfies the threshold (i.e., "Yes" in subprocess 830), indicating that fault 340 is within the protection zone defined by reach setting 336, controller 332 may trip circuit breaker 316 in subprocess 840 to electrically isolate the fault location on power line 310. Otherwise, when determining that the estimated fault location does not satisfy the threshold (i.e., "No" in subprocess 830), controller 332 determines not to trip circuit breaker 316 in subprocess 850.

In the fault localization task, the need for a proper metric is imperative in evaluating the performance of machine-learning model 334. The metric must reliably capture the ability of machine-learning model 334 to make the correct decision as fast as possible. Because the problem is causal and temporal in nature, there is asymmetry in the decision-making at each temporal sample, since machine-learning model 334 can only use past trajectories (e.g., with a single threshold crossing on a fault location) to make the tripping decision. The correctness of the tripping decision depends on the temporal samples that are considered, and affects the degree of miss-operation (i.e., false negatives) and mal-operation (i.e., false positives) that creep into the resulting decisions. In addition, the speed of true positives is a separate measure of performance. The tradeoff between the accuracy of decisions and the speed of decisions makes the process of quantifying performance a non-trivial task.

Since machine-learning model 334 outputs a fault location, the idea is to compare the fault location to a threshold defining the protected zone (e.g., subprocess 830). This enables testing of machine-learning model 334 for a set of different reach settings 336. For each reach setting 336, machine-learning model 334 was tested for a specific security counter. It is expected that, if an actual fault location is near reach setting 336, the decision might not be perfect. Therefore, machine-learning model 334 was assessed by calculating how far from a reach setting 336 machine-learning model 334 is making perfect decisions. This can be represented by a blind zone, in which at least one decision is failing as either a miss-operation or mal-operation for a specific reach setting 336. The blind zone captures the total width of the zone encompassing erroneous estimates generated from false-positive (Type I) and false-negative (Type II) errors. A machine-learning model 334 with good estimations will yield narrow blind zones, whereas a machine-learning model 334 with bad estimations will yield wide blind zones. A blind zone that equals zero would mean machine-learning model 334 is making perfect decisions for all cases.

A machine-learning model 334 for estimating fault location, pruned using automated progressive pruning, as disclosed herein, was tested in a transmission system in the presence of converter-interfaced renewable power generation. The transmission system comprised two lines, with one line optionally open.

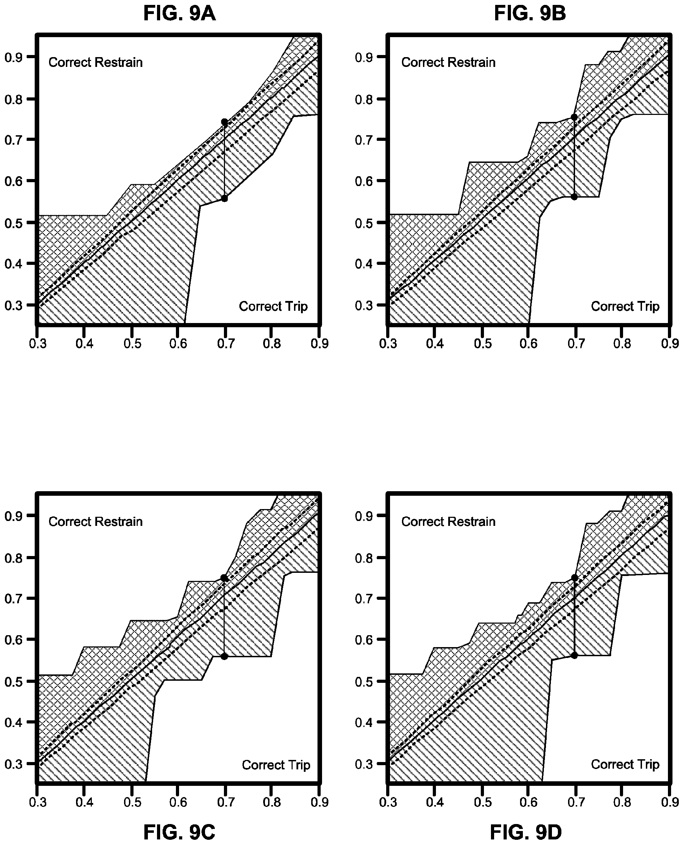

FIGS. 9A-9D illustrate the blind zones achieved by various examples of machine-learning models for fault localization during testing. In each of FIGS. 9A-9D, the x-axis represents different reach settings 336, which correspond to the threshold applied (e.g., in subprocess 830) to the estimate of fault location output by the respective machine-learning model 334 (e.g., in subprocess 820). The y-axis represents the fault location and corresponding blind zone ranges. The solid center line represents cases in which the fault location exactly equals the reach setting 336. Cases above the center line are cases in which the fault location is greater than the reach setting 336, such that line protection system 330 should decide not to trip (i.e., restrain), as represented by subprocess 850. Cases below the center line are cases in which the fault location is less than the reach setting 336, such that line protection system 330 should decide to trip, as represented by subprocess 840. The dashed lines represent user-specified boundaries on the erroneous estimates. The narrower the blind zones are outside of the dashed lines, the better the machine-learning model is. The hatched areas collectively represent the blind zone, with the hatched areas above the center line representing an area that contains at least one false negative (i.e., incorrect restrain) for the given fault location, and the hatched area below the center line representing an area that contains at least one false positive (i.e., incorrect trip) for the given fault location. For testing, the mean speed was calculated for all reach settings 336 for all correct tripping decisions, including the security counter delay. A reach setting 336 of 70% is typically used in line protection systems 330. Thus, the width of the blind zone for the 70% reach setting 336, represented as 0.7 on the x-axis, has been highlighted to demonstrate the respective machine-learning model's performance for this reach setting 336. The security and dependability of the machine-learning model at the 70% reach setting 336 were also calculated.

FIG. 9A represents the blind zone for the existing machine-learning model, prior to pruning. At the 70% reach setting 336, the blind zone was 17.9%, the calculated security was 99.3%, the calculated dependability was 98.4%, and the mean speed was 24.8 milliseconds.

FIG. 9B represents the blind zone for a machine-learning model after pruning the existing machine-learning model using a brute-force method in which a given layer of the existing machine-learning model was hand-crafted. At the 70% reach setting 336, the blind zone was 19.4%, the calculated security was 98.7%, the calculated dependability was 98.8%, and the mean speed was 14.8 milliseconds.

FIG. 9C represents the blind zone for a machine-learning model after automated progressive pruning, according to a first embodiment in which all layers in the new architecture remain learnable, such that fine-tuning affects all layers.

At the 70% reach setting 336, the blind zone was 18.4%, the calculated security was 98.8%, the calculated dependability was 98.3%, and the mean speed was 14.8 milliseconds.

FIG. 9D represents the blind zone for a machine-learning model after automated progressive pruning, according to a second embodiment in which all of the layers, except for the two layers being trained, are frozen during an iteration of subprocess 426, and the two learnable layers are trained using a few epochs of Adam training. In this second embodiment, the entire architecture is fine-tuned after the two learnable layers are trained in each iteration of subprocess 426. At the 70% reach setting 336, the blind zone was 18.8%, the calculated security was 98.7%, the calculated dependability was 98.5%, and the mean speed was 14.8 milliseconds. This second embodiment resulted in faster pruning, but with a small drop in performance relative to the first embodiment.

In standard practice, a blind zone of 20% or less at the 70% reach setting 336 is considered to be satisfactory. Thus, both the first and second embodiment of automated progressive pruning achieved satisfactory results. In addition, both embodiments of automated progressive pruning produced smaller blind zones than the brute force method. Moreover, both embodiments of automated progressive pruning achieved a smaller pruned machine-learning model, relative to the brute force method as depicted in the following table:

| Pruning Method | # Parameters before pruning | # Parameters after pruning | % Pruned |
|---|---|---|---|
| APP-learnable | 466,673 | 416,253 | 10.8 |
| APP-frozen | 466,673 | 428,858 | 8.1 |
| Brute force | 466,673 | 440,144 | 5.7 |

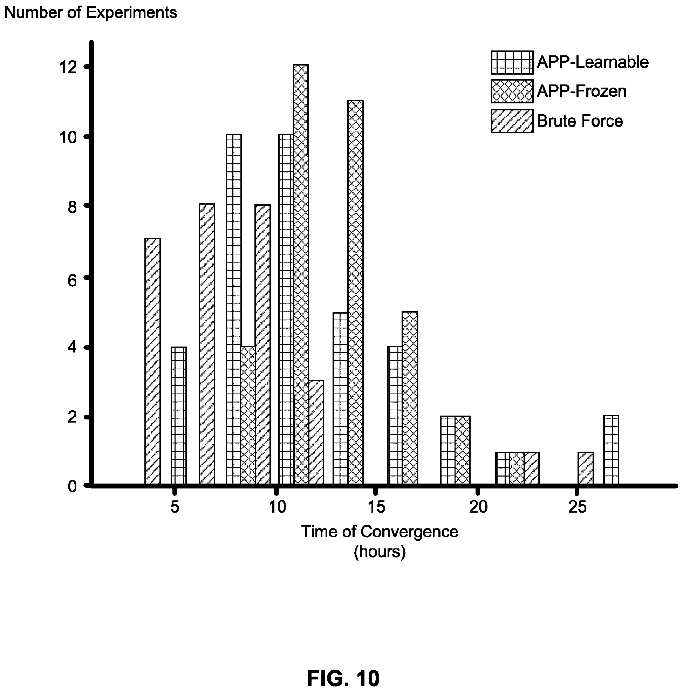

Notably, there was a sublinear increase in time required for pruning and fine-tuning with increasing number of iterations in automated progressive pruning, when compared with the time required by the brute-force method to prune and fine-tune the machine-learning model with one given layer (i.e., one iteration). FIG. 10 is a graph of the times of convergence for both embodiments of automated progressive pruning, as well as the brute-force method. The times corresponding to the embodiments of automated progressive pruning are for an architecture with two-to-four alternative layers and two iterations of pruning, whereas the times corresponding to the brute-force method correspond to one alternative layer and one iteration of pruning.

7. Example Embodiments

Disclosed embodiments jointly tune both the architecture and parameters of a machine-learning model, such as a neural network. The neural network may be a convolutional neural network, deep neural network, recurrent neural network, or other type of artificial neural network. In an embodiment, the tuning is performed with a constraint on the dimensions of the machine-learning model, to prune the machine-learning model. Pruning reduces the overall size of the machine-learning model so that it is suitable, for example, to be executed (e.g., in real time) on a system with limited computational capacity, such as a line protection system 330 for a power line or other embedded system. Unlike conventional pruning methods, which result in sparse machine-learning models, the disclosed pruning produces a dense machine-learning model with reduced dimension that works satisfactorily on regression tasks on time series data (e.g., fault localization). The dense machine-learning model is especially beneficial for deployment in hardware that cannot accommodate the computational complexity pertaining to sparse matrix operations. The disclosed automated progressive tuning is also less costly and more interpretable that conventional methods.

The disclosed automated progressive tuning may be employed to tune a machine-learning model for any application that requires adaptation of the machine-learning model from a first environment to a second environment. The first and second environments may be different in some characteristic. The difference may be any change in the data, such as a change in the input-output distribution of the data. For example, the first environment and the second environment may both require performance of the same task (e.g., fault localization), but with different distributions of source impedance ratios or line impedances. More generally, the first and second environments may involve the same task being performed with a different data distribution. Alternatively, the first and second environments could involve the performance of different, but related, tasks.

In an embodiment, the disclosed automated progressive tuning may be automated progressive pruning. The disclosed automated progressive is especially beneficial in environments in which a pruned dense machine-learning model is required. One such environment is hardware embedding, in which the functions are written in a low-level programming language (e.g., C language) for computational efficiency, and in which sparse matrix calculation is costly. More generally, automated progressive pruning may be used to reduce the size of a machine-learning model that was trained for a first, computationally richer environment (e.g., in which more computational resources are available) for deployment in a second, computationally poorer environment (e.g., in which computational resources are less available).

One described and tested example of the second, computationally poor environment is line protection system 330 for protection of overhead lines. In particular, the task of fault localization in time domain protection was tested to demonstrate the performance of the machine-learning model produced by automated progressive pruning. However, it should be understood that this is simply one example, and that the first and/or second environments may involve other tasks for other applications. Examples of such tasks include, without limitation, power system state estimation, topology estimation, parameter estimation (e.g., grid inertia), power flow estimation, load forecasting, or the like. Notably, these particular examples all benefit from a final dense machine-learning model that is sufficiently small to be embedded in hardware. Accordingly, a full model may be trained to achieve a satisfactory performance level in a first, computationally richer environment, and then pruned using the disclosed automated progressive pruning to obtain a smaller, dense model for deployment in a second, computationally poorer environment, without much loss in performance.

Embodiment 1: A method comprising using at least one hardware processor to: receive a machine-learning model with an architecture and parameters trained for operation in a first environment; jointly tune both the architecture and the parameters of the machine-learning model using a training dataset for a second environment that is different from the first environment; and deploy the tuned machine-learning model to the second environment.

Embodiment 2: The method of Embodiment 1, wherein the machine-learning model comprises a neural network.

Embodiment 3: The method of Embodiment 2, wherein the neural network is a convolutional neural network.

Embodiment 4: The method of either Embodiment 2 or 3, wherein jointly tuning both the architecture and the parameters of the machine-learning model comprises, until a stopping condition is satisfied, for each of one or more layers of the neural network, retraining the layer.

Embodiment 5: The method of Embodiment 4, wherein the one or more layers are a plurality of layers.

Embodiment 6: The method of Embodiment 5, wherein the plurality of layers are trained in an order from one of the plurality of layers that is closest to an output of the machine-learning model to another one of the plurality of layers that is closest to an input of the machine-learning model.

Embodiment 7: The method of any one of Embodiments 2 through 6, wherein jointly tuning both the architecture and the parameters of the machine-learning model comprises, in each of one or more iterations: selecting one of a plurality of layers in the neural network that has not been retrained in any prior one of the one or more iterations; retraining the selected layer; determining if a stopping condition is satisfied; when the stopping condition is satisfied, stopping the joint tuning; and, when the stopping condition is not satisfied, adding a next iteration to the one or more iterations.

Embodiment 8: The method of Embodiment 7, wherein the one or more iterations are a plurality of iterations, wherein each selected layer is retrained according to a learning rate, and wherein jointly tuning both the architecture and the parameters of the machine-learning model further comprises, in at least one of the plurality of iterations, when the stopping condition is not satisfied, changing the learning rate prior to the next iteration.

Embodiment 9: The method of either Embodiment 7 or 8, wherein retraining each selected layer comprises pruning the selected layer.

Embodiment 10: The method of Embodiment 9, wherein the stopping condition comprises a threshold indicating a measure of reduction in a size of the machine-learning model.

Embodiment 11: The method of either Embodiment 9 or 10, wherein each selected layer is retrained according to a learning rate, and wherein jointly tuning both the architecture and the parameters of the machine-learning model further comprises, in each of the one or more iterations, when the stopping condition is not satisfied, reducing the learning rate prior to the next iteration.

Embodiment 12: The method of any one of Embodiments 7 through 11, wherein retraining the selected layer comprises: selecting a plurality of alternative layers that each have a different size than the selected layer; training the plurality of alternative layers, using the training dataset, to minimize cross-entropy loss of the machine-learning model; and selecting one of the plurality of alternative layers, having a lowest measure of error, as the retrained layer.

Embodiment 13: The method of Embodiment 12, wherein the cross-entropy loss comprises negative log-likelihood loss, and wherein the measure of error comprises mean squared error.

Embodiment 14: The method of Embodiment 12 or 13, wherein each of the plurality of alternative layers has a smaller size than the selected layer.

Embodiment 15: The method of any one of Embodiments 12 through 14, wherein each of the plurality of alternative layers is selected to have a size, within a restricted search space around a size of the selected layer, that differs from the size of the selected layer and any other one of the plurality of alternative layers.

Embodiment 16: The method of Embodiment 15, wherein each of the plurality of alternative layers has a smaller size than the selected layer, wherein the neural network is a convolutional neural network, and wherein the restricted search space is defined based on a number of filters to be pruned from the selected layer.

Embodiment 17: The method of Embodiment 16, wherein the method further comprises using the at least one hardware processor to determine the number of filters to be pruned using principal component analysis.

Embodiment 18: The method of any one of the preceding embodiments, wherein the tuned machine-learning model estimates a location of a fault on a power line based on one or more measured parameters, wherein the training dataset comprises labeled feature vectors, and wherein each of the labeled feature vectors comprises a value for each of the one or more measured parameters and is labeled with a fault location, wherein the joint tuning comprises pruning the machine-learning model, wherein the second environment is a relay configured to trip a circuit breaker on the power line, and wherein deploying the tuned machine-learning model comprises installing the tuned machine-learning model in a controller of the relay.

Embodiment 19: A system comprising: at least one hardware processor; and software that is configured to, when executed by the at least one hardware processor, perform the method of any one of Embodiments 1 through 18.

Embodiment 20: A non-transitory computer-readable medium having instructions stored therein, wherein the instructions, when executed by a processor, cause the processor to perform the method of any one of Embodiments 1 through 18.

The above description of the disclosed embodiments is provided to enable any person skilled in the art to make or use the invention. Various modifications to these embodiments will be readily apparent to those skilled in the art, and the general principles described herein can be applied to other embodiments without departing from the spirit or scope of the invention. Thus, it is to be understood that the description and drawings presented herein represent a presently preferred embodiment of the invention and are therefore representative of the subject matter which is broadly contemplated by the present invention. It is further understood that the scope of the present invention fully encompasses other embodiments that may become obvious to those skilled in the art and that the scope of the present invention is accordingly not limited.

As used herein, the terms "comprising," "comprise," and "comprises" are openended. For instance, "A comprises B" means that A may include either: (i) only B; or (ii) B in combination with one or a plurality, and potentially any number, of other components. In contrast, the terms "consisting of," "consist of," and "consists of" are closed-ended. For instance, "A consists of B" means that A only includes B with no other component in the same context.

Combinations, described herein, such as "at least one of A, B, or C," "one or more of A, B, or C," "at least one of A, B, and C," "one or more of A, B, and C," and "A, B, C, or any combination thereof" include any combination of A, B, and/or C, and may include multiples of A, multiples of B, or multiples of C. Specifically, combinations such as "at least one of A, B, or C," "one or more of A, B, or C," "at least one of A, B, and C," "one or more of A, B, and C," and "A, B, C, or any combination thereof" may be A only, B only, C only, A and B, A and C, B and C, or A and B and C, and any such combination may contain one or more members of its constituents A, B, and/or C. For example, a combination of A and B may comprise one A and multiple B's, multiple A's and one B, or multiple A's and multiple B's.

## Claims

1. A method comprising using at least one hardware processor to:

   receive a machine-learning model with an architecture and parameters trained for operation in a first environment;
   jointly tune both the architecture and the parameters of the machine-learning model using a training dataset for a second environment that is different from the first environment; and
   deploy the tuned machine-learning model to the second environment.

2. The method of Claim 1, wherein the machine-learning model comprises a neural network.

3. The method of Claim 2, wherein the neural network is a convolutional neural network.

4. The method of Claim 2, wherein jointly tuning both the architecture and the parameters of the machine-learning model comprises, until a stopping condition is satisfied, for each of one or more layers of the neural network, retraining the layer.

5. The method of Claim 4, wherein the one or more layers are a plurality of layers.

6. The method of Claim 5, wherein the plurality of layers are trained in an order from one of the plurality of layers that is closest to an output of the machine-learning model to another one of the plurality of layers that is closest to an input of the machine-learning model.

7. The method of Claim 2, wherein jointly tuning both the architecture and the parameters of the machine-learning model comprises, in each of one or more iterations:

selecting one of a plurality of layers in the neural network that has not been retrained in any prior one of the one or more iterations;

retraining the selected layer;

determining if a stopping condition is satisfied;

when the stopping condition is satisfied, stopping the joint tuning; and,

when the stopping condition is not satisfied, adding a next iteration to the one or more iterations.

8. The method of Claim 7, wherein the one or more iterations are a plurality of iterations, wherein each selected layer is retrained according to a learning rate, and wherein jointly tuning both the architecture and the parameters of the machine-learning model further comprises, in at least one of the plurality of iterations, when the stopping condition is not satisfied, changing the learning rate prior to the next iteration.

9. The method of Claim 7, wherein retraining each selected layer comprises pruning the selected layer.

10. The method of Claim 9, wherein the stopping condition comprises a threshold indicating a measure of reduction in a size of the machine-learning model.

11. The method of Claim 9, wherein each selected layer is retrained according to a learning rate, and wherein jointly tuning both the architecture and the parameters of the machine-learning model further comprises, in each of the one or more iterations, when the stopping condition is not satisfied, reducing the learning rate prior to the next iteration.

12. The method of Claim 7, wherein retraining the selected layer comprises:

selecting a plurality of alternative layers that each have a different size than the selected layer;

training the plurality of alternative layers, using the training dataset, to minimize cross-entropy loss of the machine-learning model; and

selecting one of the plurality of alternative layers, having a lowest measure of error, as the retrained layer.

13. The method of Claim 12, wherein the cross-entropy loss comprises negative log-likelihood loss, and wherein the measure of error comprises mean squared error.

14. The method of Claim 12, wherein each of the plurality of alternative layers has a smaller size than the selected layer.

15. The method of Claim 12, wherein each of the plurality of alternative layers is selected to have a size, within a restricted search space around a size of the selected layer, that differs from the size of the selected layer and any other one of the plurality of alternative layers.

16. The method of Claim 15, wherein each of the plurality of alternative layers has a smaller size than the selected layer, wherein the neural network is a convolutional neural network, and wherein the restricted search space is defined based on a number of filters to be pruned from the selected layer.

17. The method of Claim 16, wherein the method further comprises using the at least one hardware processor to determine the number of filters to be pruned using principal component analysis.

18. The method of Claim 1, wherein the tuned machine-learning model estimates a location of a fault on a power line based on one or more measured parameters, wherein the training dataset comprises labeled feature vectors, and wherein each of the labeled feature vectors comprises a value for each of the one or more measured parameters and is labeled with a fault location, wherein the joint tuning comprises pruning the machine-learning model, wherein the second environment is a relay configured to trip a circuit breaker on the power line, and wherein deploying the tuned machine-learning model comprises installing the tuned machine-learning model in a controller of the relay.

19. A system comprising:

at least one hardware processor; and

software that is configured to, when executed by the at least one hardware processor,

receive a machine-learning model with an architecture and parameters trained for operation in a first environment,

jointly tune both the architecture and the parameters of the machine-learning model using a training dataset for a second environment that is different from the first environment, and
deploy the tuned machine-learning model to the second environment.

**20.** A non-transitory computer-readable medium having instructions stored therein, wherein the instructions, when executed by a processor, cause the processor to:

receive a machine-learning model with an architecture and parameters trained for operation in a first environment;
jointly tune both the architecture and the parameters of the machine-learning model using a training dataset for a second environment that is different from the first environment; and
deploy the tuned machine-learning model to the second environment.

**FIG. 1**

<u>200</u>

FIG. 2

**Line Protection System**
**330**

**Controller**
**332**

**ML Model**
**334**

312

V

340

CB
316

310

314

320A

320B

336

**FIG. 3**

**400**

```
┌─────────────┐
│    START    │
└──────┬──────┘
       │
       ▼
┌─────────────────────────────────────────────────────────┐
│ Receive machine-learning model for operation in first   │
│ environment                                             │
│ 410                                                     │
└──────────────────────┬──────────────────────────────────┘
                       │
                       ▼
┌─────────────────────────────────────────────────────────┐
│ Jointly tune both architecture and parameters of        │
│ machine-learning model using training dataset for       │
│ second environment                                      │
│ 420                                                     │
└──────────────────────┬──────────────────────────────────┘
                       │
                       ▼
┌─────────────────────────────────────────────────────────┐
│ Deploy tuned machine-learning model to second           │
│ environment                                             │
│ 430                                                     │
└──────────────────────┬──────────────────────────────────┘
                       │
                       ▼
                ┌─────────────┐
                │     END     │
                └─────────────┘
```

**FIG. 4**

420

```
            ┌─────────┐
            │  START  │
            └─────────┘
                 │
                 ▼
            ╱─────────╲
           ╱  Stopping  ╲        Yes      ┌─────────┐
          ⟨ condition satisfied? ⟩──────▶│   END   │
           ╲    422    ╱                  └─────────┘
            ╲─────────╱
                 │
                No
                 │
                 ▼
        ┌─────────────────┐
        │   Select layer   │
        │       424        │
        └─────────────────┘
                 │
                 ▼
        ┌─────────────────┐
        │ Retrain selected layer │
        │       426        │
        └─────────────────┘
```

# FIG. 5

NLL Loss

LogSoftmax

600

Layer i+2

Layer i+1$_1$    Layer i+1$_2$    Layer i+1$_n$

Layer i$_1$    Layer i$_2$    •  •  •    Layer i$_n$

Layer i-1

Layer 2

Layer 1

**FIG. 6**

$$(r - \hat{r}_j)^2$$

$$(r - \hat{r}_{j+1})^2$$

| Layer learned from iteration j-1 |
|---|

| Layer learned from iteration j-1 |
|---|

**Jointly Retrain Two Layers in iteration j**

| Layer learned from iteration j-1 |
|---|

| Layer learned from iteration j-1 |
|---|

| Layer learned from iteration j-1 |
|---|

| Layer learned from iteration j-1 |
|---|

Learning rate = α/j

| Layer learned from iteration j |
|---|

| Layer learned from iteration j |
|---|

| Layer learned from iteration j |
|---|

**Jointly Retrain Two Layers in iteration j+1**

| Layer learned from iteration j |
|---|

| Layer learned from iteration j |
|---|

| Layer learned from iteration j |
|---|

Learning rate = α/(j+1)

**FIG. 7**

**800**

```
            ┌─────────┐
            │  START  │
            └────┬────┘
                 │
                 ▼
┌────────────────────────────────────────────┐
│          Receive Measurements              │
│                  810                       │
└────────────────────┬───────────────────────┘
                     │
                     ▼
┌────────────────────────────────────────────┐
│ Apply Tuned ML Model to Measurements to    │
│        Estimate Fault Location             │
│                  820                       │
└────────────────────┬───────────────────────┘
                     │
                     ▼
                  ◇ Estimated ◇
      Yes      Fault Location       No
    ┌──────◇ Satisfies  Threshold? ◇──────┐
    │              830                    │
    ▼                                     ▼
┌──────────────────┐         ┌──────────────────┐
│ Trip Circuit     │         │ Do Not Trip      │
│ Breaker          │         │ Circuit Breaker  │
│ 840              │         │ 850              │
└────────┬─────────┘         └─────────┬────────┘
         │        ┌─────────┐          │
         └───────▶│   END   │◀─────────┘
                  └─────────┘
```

**FIG. 8**

## FIG. 9A

## FIG. 9B

## FIG. 9C

## FIG. 9D

FIG. 10

Europäisches
Patentamt

European
Patent Office

Office européen
des brevets

# EUROPEAN SEARCH REPORT

Application Number

EP 22 21 7410

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CN 112 770 353 A (UNIV WUHAN; BEIJING DAJIA INTERCONNECTION INFORMATION TECH CO LTD) 7 May 2021 (2021-05-07) * paragraph [0104] – paragraph [0128] * * figures 1-6 * | 1-20 | INV. G06N3/0464 G06N3/0495 G06N3/0442 G06N3/09 |
| A | WO 2018/053835 A1 (INTEL CORP [US]; YAO ANBANG [CN] ET AL.) 29 March 2018 (2018-03-29) * paragraph [0126] – paragraph [0129] * | 9,16,17 | |

TECHNICAL FIELDS
SEARCHED      (IPC)

G06N

The present search report has been drawn up for all claims

| Place of search | Date of completion of the search | Examiner |
|---|---|---|
| The Hague | 31 October 2023 | Baldan, Marco |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 22 21 7410

This annex lists the patent family members relating to the patent documents cited in the above-mentioned European search report.
The members are as contained in the European Patent Office EDP file on
The European Patent Office is in no way liable for these particulars which are merely given for the purpose of information.

31-10-2023

| Patent document cited in search report | | Publication date | Patent family member(s) | | Publication date |
|---|---|---|---|---|---|
| CN 112770353 | A | 07-05-2021 | NONE | | |
| WO 2018053835 | A1 | 29-03-2018 | US | 2019197407 A1 | 27-06-2019 |
| | | | WO | 2018053835 A1 | 29-03-2018 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **YONG-DEOK et al.** Compression of Deep Convolutional Neural Networks for Fast and Low Power Mobile Applications. *International Conference on Learning Representations (ICLR),* 2016

- **HAN et al.** Once-for-All: Train One Network and Specialize It for Efficient Deployment. *ICLR,* 2020
- **YIHUI et al.** AMC: AutoML for Model Compression and Acceleration on Mobile Devices. *arXiv,* 2019